# EUROPEAN PATENT SPECIFICATION

(11) **EP 2 825 370 B1**
(45) Date of publication and mention of the grant of the patent: **25.05.2016**
(21) Application number: 13713553.9
(22) Date of filing: 13.03.2013
(51) Int. Cl.: B29C 65/50, B65H 19/18

(54) **DEVICE AND METHOD FOR CONNECTING TWO ENDS OF FOIL**
VORRICHTUNG UND VERFAHREN ZUM VERBINDEN ZWEIER ENDEN EINER FOLIE
DISPOSITIF ET PROCÉDÉ DE RACCORDEMENT DE DEUX EXTRÉMITÉS D'UNE FEUILLE DE MÉTAL

(30) Priority: 16.03.2012 NL 2008497
(43) Date of publication of application: 21.01.2015
(73) Proprietor: Fuji Seal International, Inc., Osaka-shi, Osaka 532-0003 (JP)
(72) Inventor: VAN HECK, Marinus Antonius Leonarda, NL-5401 LR Uden (NL)
(74) Representative: Hylarides, Paul Jacques
(86) International application number: PCT/NL2013/050170
(87) International publication number: WO 2013/137731

(56) References cited:
- JP-A- 1 242 350
- JP-A- 10 114 449
- US-B1- 6 533 891

## Description

The invention relates to a device and a method for connecting two ends of foil by means of adhesive tape. The invention also relates to a controller arranged to execute the method.

Arranging sleeves around containers is a well known, low cost labelling method for providing a suitable label on a container. Included by reference is WO 2008/088210 A1 by the same applicant disclosing prior art methods and devices. Tubular foil is used to form the envelope-like sleeves that can be arranged around a container as a label. In an embodiment a sleeve is heat-shrunk around the container for fixing the sleeve around the container.

The foil is supplied to a sleeving apparatus for sleeving the container from a reel. The tubular foil is provided as a flattened tube of plastic foil. The tubular foil supplied at high speeds to provide a continuous supply. Connecting devices are provided to switch from foil of an almost empty reel to foil supplied from a new, filled reel. The connection device allows connecting the end of the downstream (old) tubular foil with an end of the upstream (new) tubular foil from a new reel. Different connection methods are known, e.g. using a tape or making a sealed connection.

In a prior art arrangement, tape is provided onto a tape receiving surface of a tape applicator, said tape applicator e.g. connected to a robot arm for performing a complex motion for applying the tape onto the ends of tubular foil. In other prior art arrangements tape is dispensed from a tape dispenser moving along the tape receiving surface, while supplying the tape at a dispensing speed similar to the velocity.

US 6,880,604 discloses a tape splicer for connecting ends of tubular foil having splicing tape applicators.

JP 10 114449 discloses an apparatus for connecting the ends of single layered foils by attaching to the respective ends a doubled-sided adhesive tape dispensed from a tape dispenser. The tape is pulled by a rotating tape sticking mechanism having a substantially square cross-section. The tape extends on three (of four) sides of the tape applicator. Each of the sides comprises an indentation between projections to which one side of the tape adheres. The tape is cut into pieces of tape by a tape cutter and then moved onto the ends of the foils. The tape should be adhesive on both sides since it should adhere to both the rotating tape sticking mechanism and the foil ends. The apparatus is therefore unsuitable for connecting foil ends using tape that is adhesive on one side only. Furthermore, the tape should first be attached manually to the tape sticking mechanism before it can be pulled and the apparatus has a complex structure. Finally, the device has a complex structure and is not configured for handling more than one new foil.

JP 1-242350 discloses an apparatus for connecting foil ends. A piece of one-sided adhesive tape which has been cut beforehand to a predetermined length longer than the width of the foils is placed on an adhesive tape mounting head and kept on the mounting head by suction. Next the mounting head is rotated by 180 degrees to cause the adhesive side of the tape to face the foil ends. The tape is pressed onto a front side of the foil ends and then folded beyond the edges of the foils so that the tape also adheres to the back side of the foil ends. A complex pick-and-place unit is needed to place a piece of tape on the adhesive tape mounting head.

US 6 533 891 discloses a splice strip applicating device configured to receive a tape (i.e. a splice strip) on a top side of an applicator head. A dispenser holding a roll of tape (splicing material) is positioned in proximity to the load position. A gripper grabs the free end of the tape and pulls it along the receiving surface of the applicator head. Once the tape has been applied by the moving gripper to the receiving surface of the applicator head, the applicator had is rotated over 180 degrees and the tape is pressed onto a pair of abutting foil ends by moving the applicator head downward. A drawback of the known device is that it needs a gripper to pull the tape along the surface of the tape applicator which makes the device relatively complex.

It would be an object of the present invention to provide a device and method for automatically connecting two ends of foil having a reduced complexity and/or an increased efficiency.

This object may be achieved in the device and method according to the appended independent claims.

According to an embodiment, a device for connecting two ends of foil by means of tape is provided. In an embodiment the device has a supply for foil and a processing unit for foil defining a foil projector. The supply can comprise one or more reels containing winded foil, preferably tubular foil. Once supplied, the foil is guided into the device following a foil trajectory. The foil trajectory is the path of the foil through/into the device. The one or more processing units can provide guidance. A first end of (tubular) foil can be supplied from the supply, while another end of (tubular) foil is the upstream end of foil in the processing unit.

In an embodiment, the tape dispenser comprises a blower configured to direct a gas flow to the tape receiving surface so as to blow the tape onto the tape receiving surface, while the tape is dispensed. Filtered air can be used as a supply for the blower. As tape is supplied to the tape receiving surface, the sticky side of the tape is directed away from the tape receiving surface, and is not easily handled other by indirect contact. A blower can provide some extra guidance to the tape being dispensed and not yet locked into position. As tape will extend into a dispensing direction, the blower can form a laminar airflow pressing the tape, even when it is sliding over the tape receiving surface, onto the tape receiving surface until it is locked. Also the air blower prevents curling of the tape back to a winded form when the tape is ejected from the tape dispenser. The blower may be embodied as a fan connected to a nozzle for generating a gas (air) flow and sending the air flow in a suitable direction. Other means for generating an air flow, such as a compressed air line, are within the definition of the term blower.

In an embodiment, the device for connecting two ends of the foil by an adhesive tape comprises one or more tape applicators configured for applying tape to and connecting the ends of tubular foil. In an embodiment the one or more tape applicators are positioned downstream from the supply along the foil trajectory.

In an embodiment, the tape applicator comprises a tape receiving surface, having one or more tape holders arranged to, when switched on, fix the position of the tape on the tape receiving surface. The tape receiving surface can be a rectangular surface. Tape holders can be embodied by openings/through holes in the tape receiving surface allowing to provide a vacuum when tape is positioned onto the surface. Applying a vacuum will result in fixing the position of the tape onto the surface. The vacuum generator can be switched on and off by a suitable controller and is switched on when tape is supplied to the predetermined position and is switched off after the tape is connecting the ends of the (tubular) foil.

In an embodiment, the device for connecting two ends of (tubular) foil by means of tape also comprises a tape dispenser for supplying tape to the tape receiving surface. The tape dispenser comprises a supply of tape, e.g. a replaceable cartridge.

According to an aspect of the invention, the tape dispenser is arranged to supply a tape end to a remote part of the tape receiving surface. Accordingly tape is supplied to an area of the tape receiving surface at a certain distance. According to this embodiment, even though the tape receiving surface has surface areas that are closer, proximal to the tape dispenser, the tape dispenser supplies tape to the remote part. The tape dispensed from the tape dispenser bridges a distance from the tape dispensing end to the remote part of the tape receiving surface. This reduces the complexity of the connecting device, as relative movement of the applicator and tape dispenser with respect to each other is not necessary anymore.

According to the invention, a tape dispenser is provided that can supply tape to a remote part of the tape receiving surface, even though other ends of the tape receiving surface could be positioned closer than that remote part. The remote part is not necessarily the remote end.

In an embodiment, the tape applicators are positioned on opposite sides of the supplied tubular foil. The tubular foil is preferably supplied in a flat-like configuration wherein opposite sides of the foil lie flat upon each other. A flattened foil is e.g. winded onto a reel.

In an embodiment, the tape dispenser is arranged to supply tape from a proximal end, in an embodiment proximal end, to the remote part of the tape receiving surface. In this arrangement it is possible to move a downstream tip end of the tape over the tape receiving surface from the proximal part to a remote part.

In an embodiment, the tape is one sided tape wherein the non-sticky side of the tape is supplied onto the tape receiving surface.

In an embodiment, the device comprises a controller arranged to start the tape dispensing from the tape dispenser prior to switching on the tape holder. Switching on results in a tape fixing state. In the embodiment the tape holder is switched off during dispensing. This allows the transport of tape over the tape receiving surface during dispensing without the tape being fixed to a position.

In an arrangement, the tape holder is arranged to fix the position of the tape after dispensing. The locking or fixing of the tape position using a controller according to this embodiment, is performed only after dispensing a sufficient amount of tape, a tape length of at least the desired length. The controller is arranged to dispense tape from the tape dispenser by extending tape over at least the desired length of tape from the tape dispenser prior to switching on the tape holder.

In an embodiment, the tape receiving surface extends in a dispensing direction of the tape dispenser. The tape dispenser can be positioned, so that no further guidance of the tape is necessary to bring the tape onto the tape receiving surface.

In an embodiment, the tape dispenser is arranged to forward tape from the tape dispenser over the tape receiving surface. The tape receiving surface, when the tape holders are not switched on, allows guiding the tape to a predetermined position on the tape applicator. From that position the tape can be used to connect the ends of the (tubular) foil.

In an embodiment, the tape dispenser is arranged next to the tape applicator, the tape dispenser and tape receiving surface being in fixed relation during dispensing of the tape. This arrangement, wherein only tape is moving during dispensing of the tape, is a significant reduction of complexity of known devices for connecting ends of (tubular) foil using tape.

In a further embodiment, the tape holder comprises one or more openings in the tape receiving surface and comprises a vacuum source. Switching on the vacuum source results in a lower pressure. The lower pressure sucking through the openings locks the tape in position on the tape receiving surface. In an embodiment, the vacuum source is connected to an inner cavity of the tape applicator. The cavity is connected by openings to the tape receiving surface.

In an embodiment, the device comprises a cutting unit for cutting the dispensed tape. A desired length of tape is used for connecting the (tubular) foils and the cutting unit is arranged to cut the dispensed tape to the desired length. The cutting unit can be part of the tape dispenser.

In a further embodiment, a cutting slit is provided on the tape applicator, which allows cutting the tape by extending a knife into the cutting slit, while the tape covers said slit. The tape will be cut at the slit. The downstream part of the tape will be disconnected from the upstream part of the tape that could still be connected to tape of the tape dispenser.

In an embodiment, the tape dispenser comprises tape plus release liner as supply. In a further embodiment, the tape dispenser comprises a release liner discharge. This allows collecting release liner separated from the tape.

In a further embodiment, the tape dispenser comprises a dispensing end for separating the tape from the release liner. Accordingly, tape with release liner is supplied and guided towards the dispensing end, preferably directed at the tape receiving surface. At the dispensing end, the release liner is separated from the tape, setting free the sticky side of the tape. The release liner is preferably guided from the dispensing end to a release liner discharge, in an embodiment comprising a reel for collecting release line.

In a further embodiment, the release liner discharge comprises a drive for pulling the release liner over the dispensing end. Pulling the release liner results in a lower failure rate of the tape dispenser.

In a further embodiment, two tape applicators are mounted onto opposite sides of the foil trajectory. The tape applicators have generally parallel extending tape receiving surfaces. The tape dispenser is mounted on a movable sub frame. The movable subframe can be moved with respect to the table frame supporting the tape receiving surface. In an embodiment the tape dispenser subframe is connected to the device by a guide that can guide a movement. The guide can extend generally perpendicular to the tape receiving surfaces opposing the tape dispenser adjacent each tape receiving surface. In another embodiment the tape dispenser subframe is rotated with respect to the frame supporting the tape receiving surfaces. This allows providing a device having a single tape dispenser for a double tape applicator. Two tape applicators allow applying dispensed pieces of tape to opposite sides of the flat tubular foil. A single tape dispenser mounted on a sub frame guidable in a single direction, further reduces the complexity of the device for connecting the ends of tubular foil.

In an embodiment the foil supply can comprise multiple reels having winded foil. The device is arranged to switch from supply from a first reel to supply from a second reel. Sensors can be arranged to sense or track the supply of foil. If a reel is close to empty, switching to a new, filled reel can be initiated.

In an embodiment, a processing unit is formed by a foil buffer that is arranged to receive a significant length of foil. The foil buffer is arranged to continuously supply the foil for further downstream processing, e.g. to the sleeving device. When supply from a reel is interrupted, because it is empty, supply from that reel is stopped and the connecting device (or splicer) switches from an empty reel to a new reel. Then the connection is made between the ends of the (tubular) foil.

In an embodiment the device comprises a foil aligning unit. The foil aligning unit is arranged to align the downstream foil end and upstream foil end before connecting. The aligning unit can comprise sensors and foil engaging devices.

According to a further aspect of the invention, a method for connecting two ends of (tubular) foil by means of tape is provided. According to an embodiment of the method, a tape is dispensed onto a tape receiving surface of a tape applicator and held on the said tape receiving surface. The piece of tape is then used to connect the ends by applying the tape to these ends of (tubular) foil and releasing the tape. A simplification of prior art method is obtained by dispensing the tape onto the tape receiving surface by supplying tape to a remote part of the tape receiving surface. According to the method of the invention, even though proximal tape receiving surface is available, closer to the tape dispenser, tape dispensing can reach the remote part of the tape receiving surface. In a method according to the invention, a complex motion between the tape receiving surface and tape dispensing is overcome, as tape dispensed can reach further parts away from proximal surfaces of the tape receiving surface. It will be clear to the skilled person that the remote part of the tape receiving surface does not need to be the most remote part of the tape receiving surface. A remote part according to the invention is simply a part more remote then a proximal part, e.g. at a distance of at least 2 cm.

According to a further embodiment of the method, tape is held on the tape receiving surface only after terminating the supply of the tape. This allows moving of the tape over the tape receiving surface during the dispensing thereof. The tape dispenser is allowed to position the tape on the tape receiving surface.

According to a further method, dispensing the tape also comprises removing a release liner from the tape. A supply of tape and release liner is provided e.g. as a reel. During dispensing the tape is separated from the release liner. The tape, one sided tape, is held with the non-sticky side onto the tape receiving surface, and the sticky side on the opposite side.

According to a further method, dispensing the tape comprises pulling the release liner. Before separating the release liner, the release liner and tape are connected, and pulling the continuous release liner can be used to dispense the tape.

In an embodiment, a predetermined length of tape connects the (tubular) foil ends, and the at least predetermined length of tape is supplied during dispensing and extends from a dispensing end of the tape dispenser. By having the at least predetermined length of tape extending from the dispensing end, the remote surface area of the tape receiving surface can be reached. In an embodiment, a tape is used in the method according to the invention that has sufficient stiffness in order to allow extending the tape horizontally from the dispensing end, without it bending downward under the influence of gravity. This will allow the tape to reach the remote surface without any further guidance means beyond the dispensing tip of the tape dispenser.

According to a further embodiment, the tape is cut to the predetermined length. Preferably, the tape is held on the tape receiving surface while cutting. This allows dispensing the tape from the tape dispenser, directed and positioned by the tape dispenser, and only after positioning and fixing the position, the tape is cut to the predetermined length.

In yet a further embodiment, dispensing the tape comprises blowing the tape onto the tape receiving surface. The filtered air can be used as a medium. In an embodiment, pressurized air is used. Blowing the tape for directing the tape onto the tape receiving surface, allows a non-contact guidance of the tape. Blowing the tape can result in a laminar flow of air guiding the tape into a desired position on the tape receiving surface.

Further, dispensing the tape can comprise directing the tape towards the tape receiving surface.

According to an embodiment, dispensing the tape is performed by a tape dispenser at a fixed position to a tape receiving surface also at a fixed position. This is a considerate simplification of prior art dispensing methods.

Also, the method can comprise aligning the (tubular) foil ends. In an embodiment aligning comprises positioning the foil in a default position during foil supply. When supply is interrupted and a switch is made to a new supply, the "old' foil is in the default position and the default position is aligned with the next supply.

A controller comprising sensors can sense the positions of the edges of the (tubular) foil in the flat-like state when the (tubular) ends are connected. The longitudinal sides of the upstream and downstream (tubular) foil are aligned. After connecting the sides are aligned, which will allow a continuous processing in further downstream method steps of (tubular) foil.

According to a further aspect, a method for dispensing tape is provided, the tape having a predetermined length. The method comprises supplying a tape of the at least predetermined length in the dispensing direction, and straightening the tape to extend the tape of the at least predetermined length in the dispensing direction to allow reaching a remote part of a tape receiving surface.

According to a further aspect, a controller is provided arranged to execute the method according to any of the method steps.

In an embodiment, the controller is arranged to switch the tape holder on or off. Switching the tape holder on will fix the position of the tape on the tape receiving surface of the tape applicator. Switching the tape holder off will allow releasing the tape from the tape receiving surface.

According to yet a further aspect the invention also relates to a tape dispenser. The tape dispenser is arranged to dispense tape onto a tape receiving surface. Preferably the tape dispenser is arranged to dispense the tape on a remote part of the tape receiving surface.

Various embodiments are possible within the scope of the invention. The scope of protection is by no means limited by the illustrated embodiments. Although the invention will now be described with reference to the drawing and the claims, other (partial) aspects of the embodiments illustrated explicitly or implicitly disclosed herein, could be the subject of divisional patent applications.

Although not shown in the figures, it will be clear to the skilled person that any or each of the mechanical components can be connected to a suitable drive, in some embodiments, servo motors, that in turn can be connected to a controller for executing the method. In the figures, some of these drives, power connections, as well as connections to a controller are not shown in detail. These connections can be wired or wireless. The controller can be a computer implemented controller having an interface, and preferably having a user interface comprising a screen, input means and network connection providing a suitable bus control.

Although some embodiments are directed at processing a (flat) tubular foil, clearly the features are not limited to such a foil. Although tape is used to connect foil ends, the invention is not limited to applications using tape.

The invention will now be described with reference to the drawing showing embodiments of the method and device as well as the controller according to the invention, in which:
Figure 1a shows an overview of an embodiment of the splicer according to the invention,
Figure 1b shows a schematic overview of a system for sleeving containers using tubular foil,
Figure 2 shows a perspective view of a carriage sub frame of a splicer device seen in the direction according to arrow II,
Figure 3 shows a perspective view of a carriage sub frame of a splicer device according to arrow III in figure 1,
Figures 4a-4g show steps of tape dispensing on the tape applicator of a splicer device according to an embodiment of the invention,
Figure 5 shows a top view of the tape dispenser and tape applicator according to an embodiment of the invention, Figure 6 shows a detail according to VI in figure 5,
Figure 7 shows a detail of the most relevant tape applicator parts of the carriage sub frame of a splicer device, and
Figures 8a-8h show consecutive steps for applying a tape to foil and connecting the foil ends.

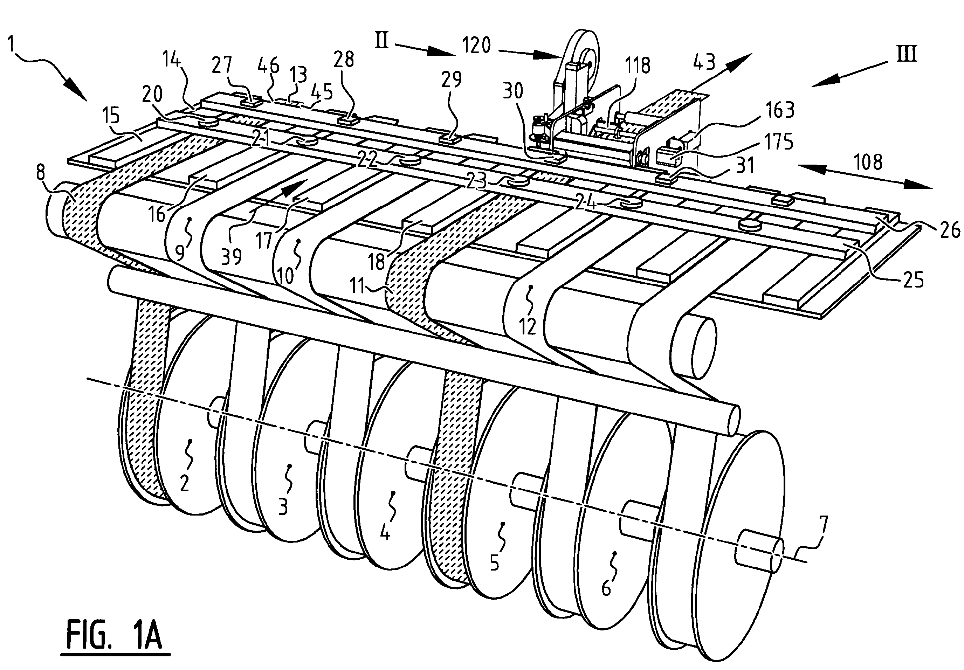

Figure 1a shows a splicing device 1. A splicing device 1, in a preferred embodiment a tape splicing device, allows providing a continuous feed of foil to downstream applications of foil. In the drawing the splicer device 1 comprises a device for tape dispensing 120, a device 103,104 for applying and connecting tape to a foil and a device to connect ends of tubular foil. The splicer device is arranged to execute methods to dispense tape, to connect foil using tape, and to connect ends of foil.

In the illustrated embodiment tubular foil of flattened form is used. Several foil supplies are provided and the splicer 1 allows connecting an end of an old foil with a beginning of a new foil. Several connection methods are available, including sealing. In the preferred embodiment a tape is used for connecting the tubular ends. Although the method will illustrate connecting tubular foil with two pieces of tape, clearly the invention also comprises using a single piece of tape or applying tape to non-tubular foil.

Several reels 2-6 are mounted to the frame of the splicing device 1 allowing rotation around an axis 7. Each reel is mountable on a separate axle sharing the axis 7. The reels 2-6 comprise wounded tubular foil in a flattened state. The foil can be imprinted. A full reel is put into the splicing device. An empty reel 2-6 can be replaced by a new reel. The splicer 1 can have more reel positions than illustrated, such as seven, or less reel positions.

Foils 8-12 are supplied from the respective reels. The reels form the supply for flat tubular foil for further downstream processing. In other embodiments a single layered foil is supplied.

A leading end 13 of one of the foils is positioned on a guidance and cutting table 14. The guidance and cutting table 14 allows an operator to position a foil end in a predetermined position so as to allow further processing. The table 14 allows guidance of the foils 8-10 along guiding blocks 15-17. The guiding blocks 15-18 can be aligned with the reels. In an embodiment the guidance and cutting table 14 comprises drives to position the (end of a) foil in a predetermined position.

The guidance and cutting table 14 also comprises individually controllable foil stops 20-24 part of a first bridge 25 that covers the foils 8-12 when they are fed over the table 14 surface. The individually controllable foil stops 20-24 allow holding the foils 8-12 in their current position. In the shown embodiment at least foils 8-10 are locked in position.

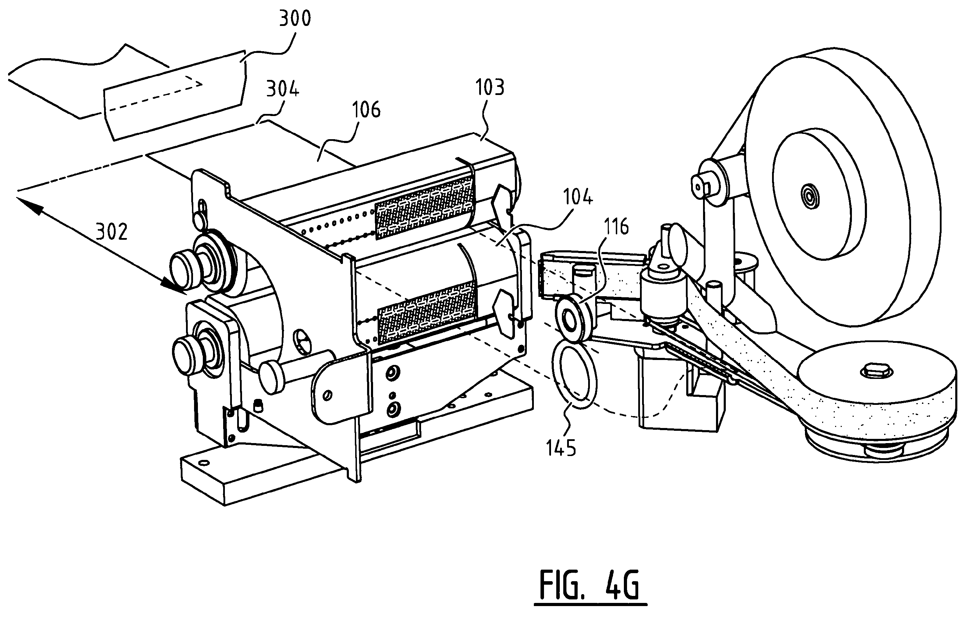

A further bridge 26 also covers the foil trajectory of the respective foils 8-12. Bridge 26 comprises individually controllable, schematically illustrated, cutting devices 27-31 that allow cutting the foil in a direction generally perpendicular to the foil feeding direction 39. An example of an actual knife part 300 of a cutting device 27-31 is shown in Figure 4g. The table 14 can have slits positioned under bridge 26 that allow cutting the foil using knives. In an embodiment a cutting device is mounted movably in direction 108 underneath the table 14. A single cutting device is then able to cut the supplied foil.

In the shown embodiment foil 11 is currently being supplied from the reel 5 over the table 14, under the bridges 25,26 to a carriage sub frame 101. When the reel 5 runs empty, an end of the foil will be formed. The splicer 1 will connect the formed end with an end of a further foil supplied from one of the other reels 2-4,6.

Foils 8-10,12 supplied from reels 2-4,6 form further foils. The further foils each have an end, in this embodiment positioned by the operator, extending somewhat from guidance and cutting table 14.

In Figure 1a foil 11 is supplied in the foil feeding direction 39. The foil alignment unit 105 is cooperating with the guiding block 18 to feed the foil in a preferred position, specifically the alignment in the direction 110.

When foil 11 is supplied, the carriage sub frame 101 allows passage of the foil 11 for further downstream handling/processing 43. Elements on the carriage sub frame 101 surround the foil trajectory.

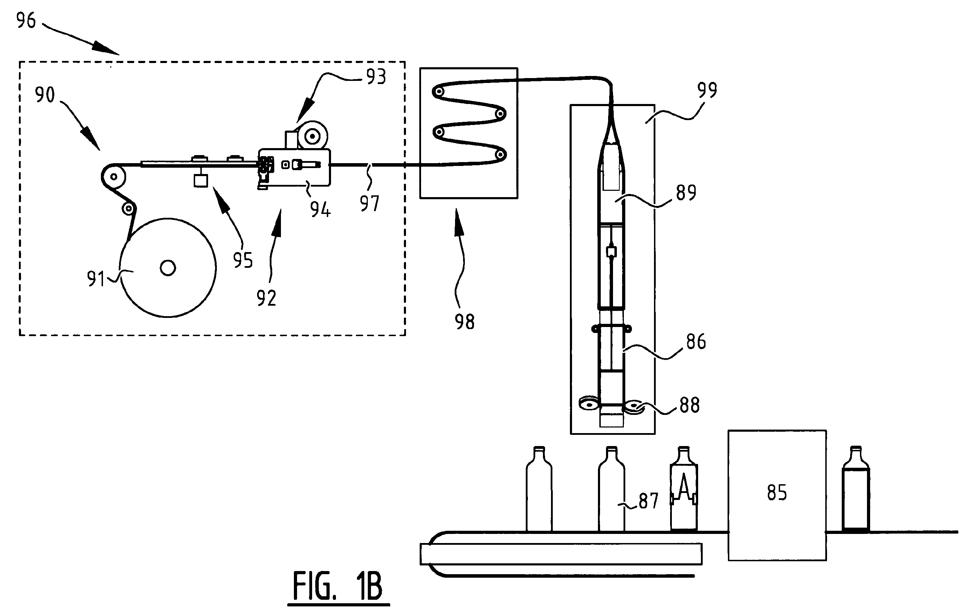

Figure 1b shows a schematic overview of a device for sleeving containers. Clearly many other applications could benefit from the devices and methods according to this disclosure and the inventions are in no way limited to the illustrated sleeving device/method.

A schematically illustrated supply 90 having a reel 91 supplies tubular foil in flattened state to a device 92 for applying to and connecting foil by tape having a tape dispenser 93. Only carriage sub frame 94 is illustrated. A schematically illustrated cutting device 95 can cut the foil and carriage sub frame 94 can move in order to allow connecting the old cut foil with a new foil from a new supply. From the splicer 96 foil 97 is fed to a buffer device 98. The buffer device 98 can contain a supply of foil. Foil is fed from the tape splicer 96 and is continuously fed further downstream. When foil supply from the splicer 96 is interrupted, e.g. when a reel runs empty, foil is fed to further downstream application from the buffer supply held in the buffer device.

Downstream from the buffer device 98 a sleeving device 99 can comprise a mandrel 89 that opens the tubular foil, cuts sleeves 86 and shoots 88 the individual sleeves over containers 87 such as bottles. Further downstream the bottles are led through an oven 85 that will heat shrink the sleeve onto the container.

In accordance to the invention any of the units downstream from the supply of foil is a processing unit. The unit connecting the ends of foil are a specific example. Although in the shown embodiment the connection unit is supported by the carriage 101, the connection unit can be mounted on other frame parts.

Now the carriage sub frame 101, in the shown embodiment carrying the device for applying and connecting tape to a foil will be discussed in more detail.

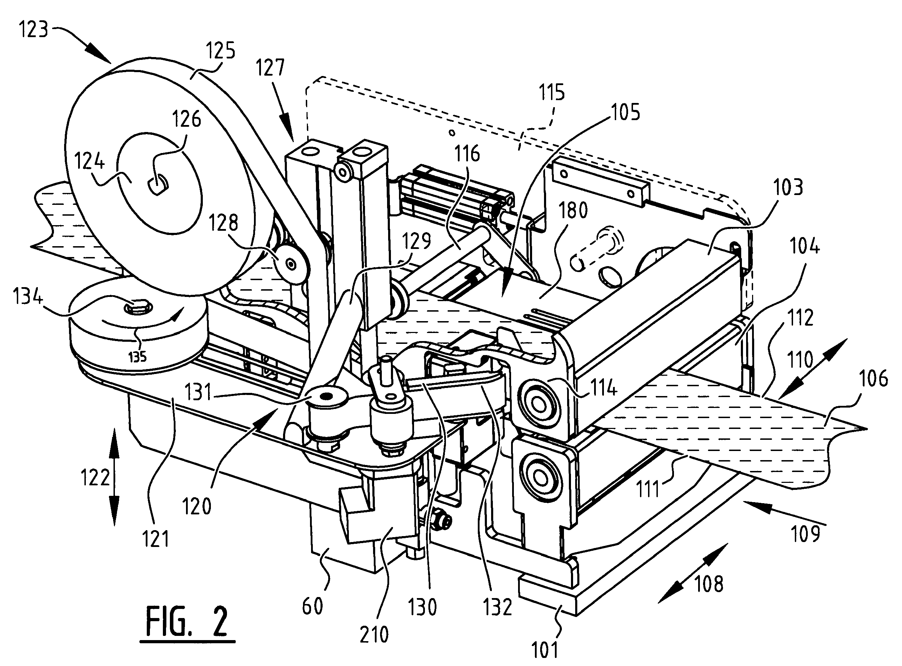

The carriage sub frame 101, shown in more detail in Figure 2, supports a tape dispenser 120, tape applicators 103 and 104, foil alignment unit 105 and several foil 106 guiding element. Further a suitable drive is pulling the foil.

Carriage sub frame 101 is arranged in the splicer device 1 such that it can be moved according to arrow 108 with respect to the frame of the splicer device 1. A suitable drive is arranged to initiate and stop movement of the carriage sub frame in direction 108. Servo drives or other electrical drives can be used for moving the carriage sub frame 101. Suitable sensors can be arranged on either the frame of the splicer device 1 or on sub frame 101 for determining and measuring the position of the carriage sub frame 101 with respect to the splicer device/frame.

When it is determined that reel 5 is running empty, a splicing method, in a preferred embodiment a tape splicing method, is initiated. The foil 11 is stopped and held by stop 23. The foil 11 is cut using a knife in cutting device 30 allowing cutting the foil at a predetermined position. This will form the end edge of an 'old' or first foil. The operator has prepared 'new' or second foil ends, such as leading end 13.

In the shown embodiment the leading end 13 is provided with an obliquely cut-away corner at both longitudinal edges, such as known from EP 1 201 585 A1 from the same applicant and incorporated by reference. In an embodiment a single layered foil is supplied having no preprocessed leading end.

The tubular foil 8 comprises at least two layers of foil connected near the edges. By cutting that edge, and in an embodiment by removing a part of the foil, the leading end 13 now comprises two layers that can be separated somewhat from each other. The cut-aways form loose lips that can be separated from each other, i.e. the mouth of the leading end 13 can be opened. In another embodiment the lips are separated by cutting the side edge without removing material.

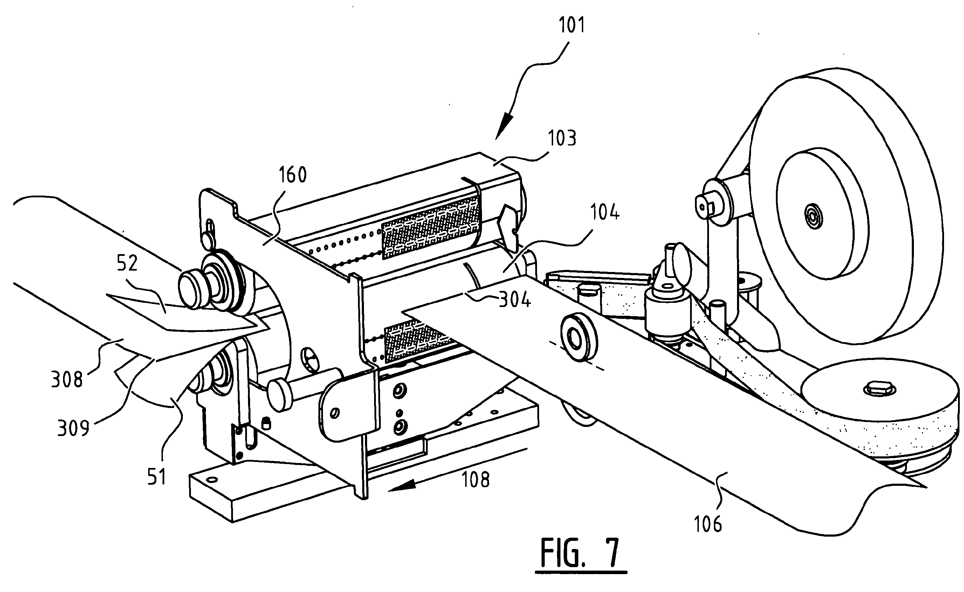

After cutting the foil 11 and transporting the formed end 304 downstream such that it is positioned inside the carriage sub frame, see e.g. figure 7, carriage sub frame 101 can e.g. move from that first position towards a second position close to leading end 13. On both transverse sides the carriage sub frame 101 has guiding wings 51,52 that allow receiving the leading end 13 in between the wings 51,52 and as a result in between tape applicators 103,104 as will be described in more detail. In further subsequent steps, because of the predetermined position of leading end 13, a splicing method connecting the ends of foil, can be executed.

In any embodiment of the invention a first position of a foil end is a position of a foil end formed when the supply (reel) runs (close to) empty. A second position is a position close to an end of a further foil to which the formed end is to be connected. In the shown embodiments the difference between a first and second position is in a direction 108 and can be overcome by transferring the carriage sub frame 101 in the direction 108.

In any embodiment a foil end holding unit can any of the processing units positioned along the foil trajectory that offers some control over the position of the end of the foil. The formed end of the foil is received in the carriage sub frame as a result of conveying the foil further downstream. The foil end holding unit doesn't have to actually engage the foil end.

The operator can replace the empty reel 5 by a new reel and position the new foil on the table 14 in the predetermined position.

Returning to figure 2, foil 106 is supplied in direction 109 from a reel with winded tubular foil. The tubular foil 106 will pass tape applicators 103, 104 positioned on opposite sides of the foil trajectory.

The position of the foil in the transverse direction 110 of the foil supply is guided and adjusted using the foil aligning unit 105. Suitable sensors determine and measure the position of the foil 106 and in particular sides 111 and 112 of foil 106 and, if needed, foil aligning unit 105 will engage foil 106 to correct the position of the foil in the transverse direction 110 back to a default position. The default position of the foil 106 is the position of the foil in which foil connection can be made. A position sensor can e.g. detect the side position of the foil 106.

Registration sensor 204 is arranged to monitor the foil and in particular the prints on the foil. Connecting the old foil and new foil is to be arranged such the repetitive print remains at the same pitch. Therefore the pitch is determined at the sensor 204 allows cutting at a predetermined position, e.g. exactly in between the prints.

Foil alignment unit 105 is connected to drive 60, in an embodiment a servo motor, that will move the alignment frame 180, e.g. by tilting, in the direction in order to align edges of the foil in the default position with regard to the transverse direction 110.

In order to allow an overview of the device, many of the frame parts are shown either only partially, such as frame part 114 or are shown with dotted lines 115, such as frame part 115.

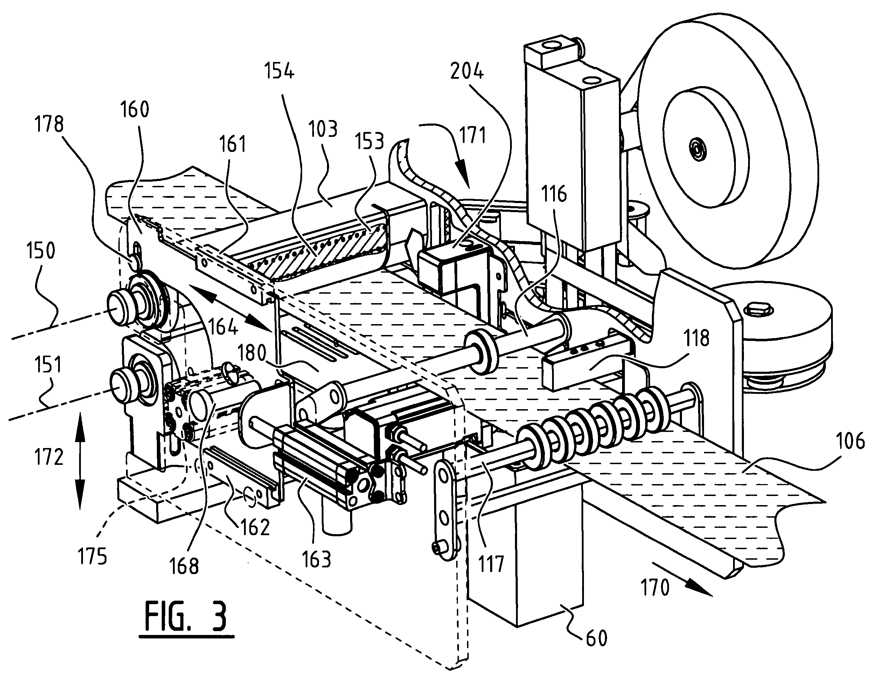

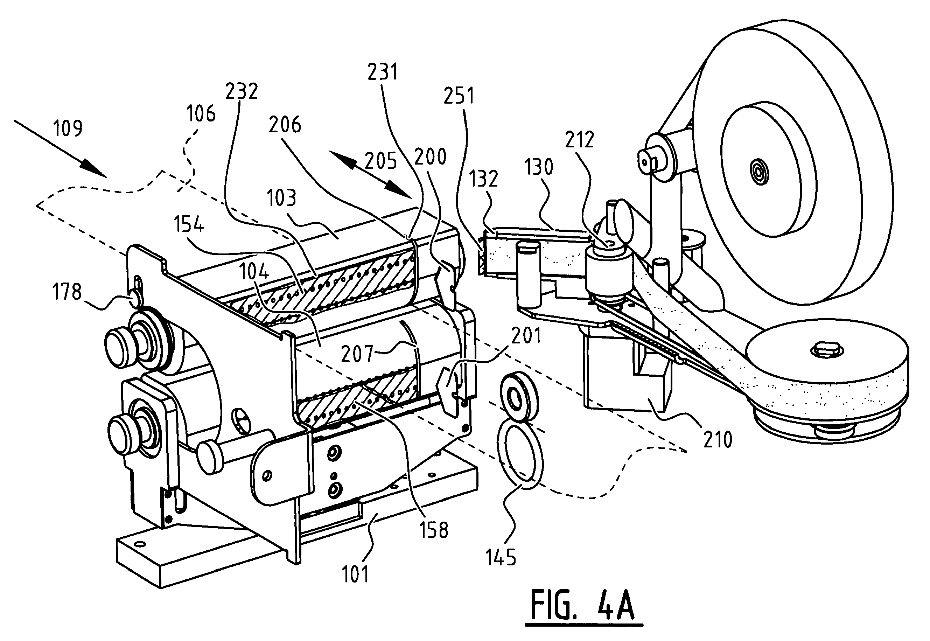

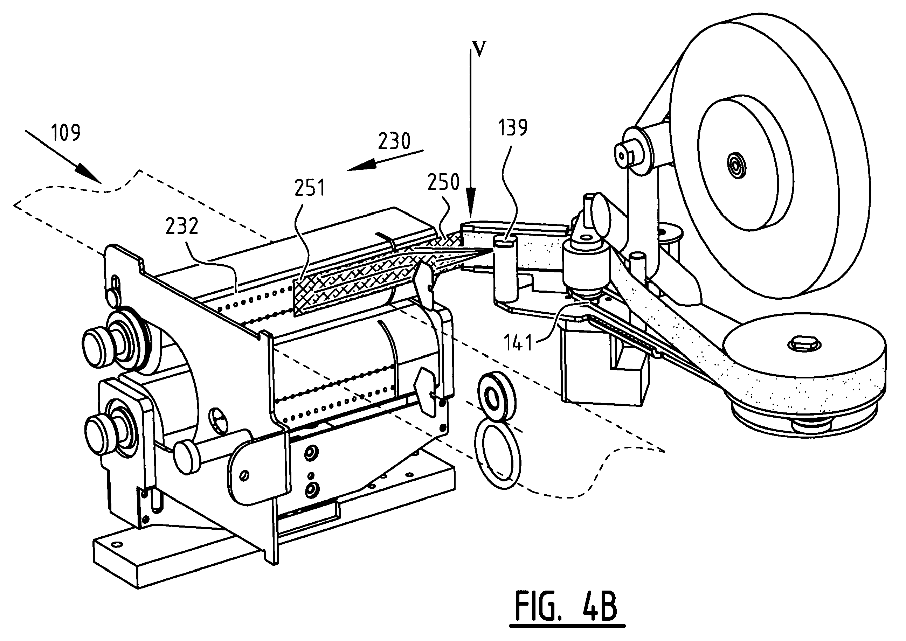

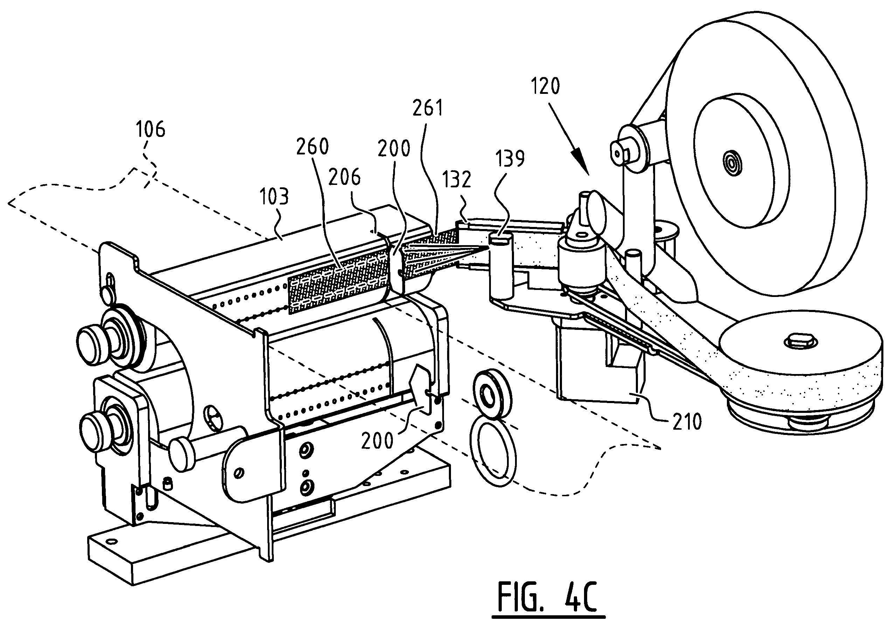

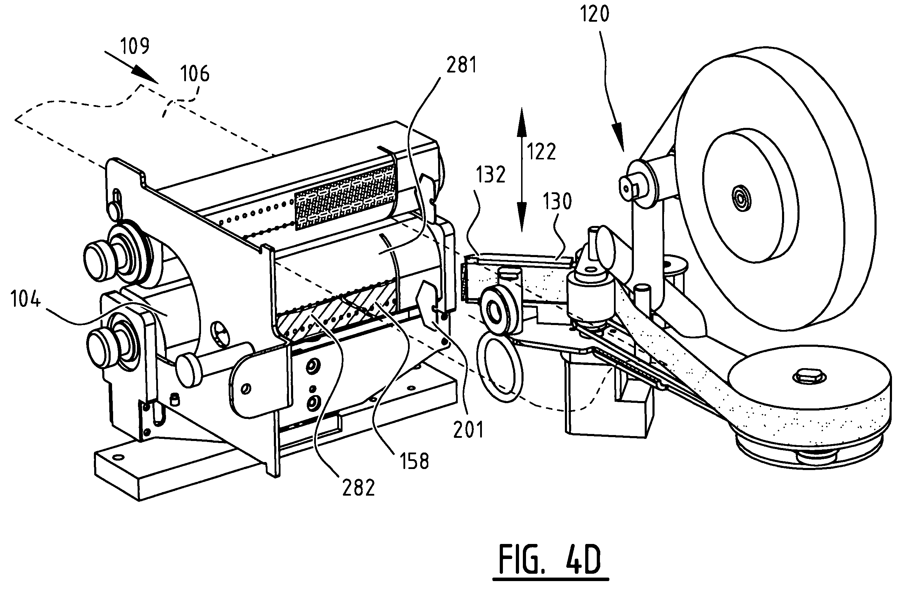

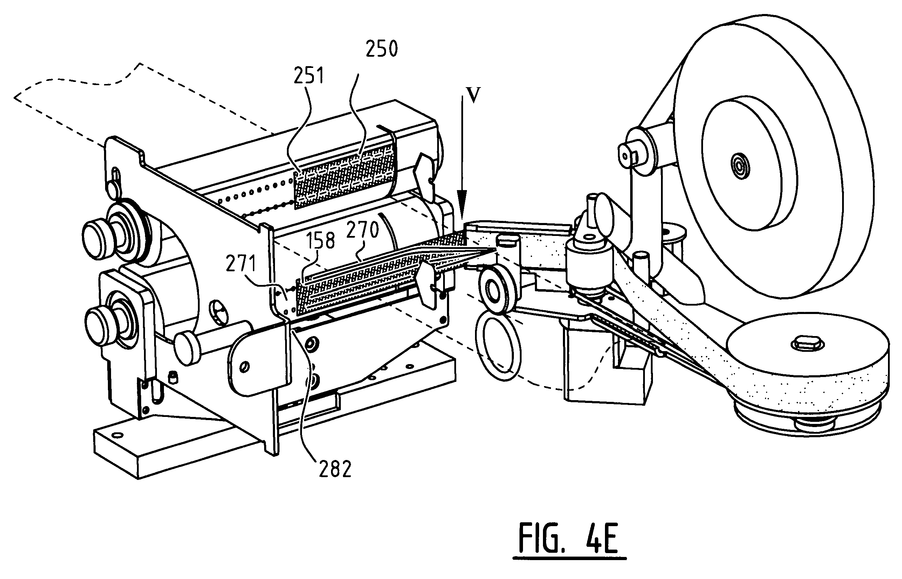

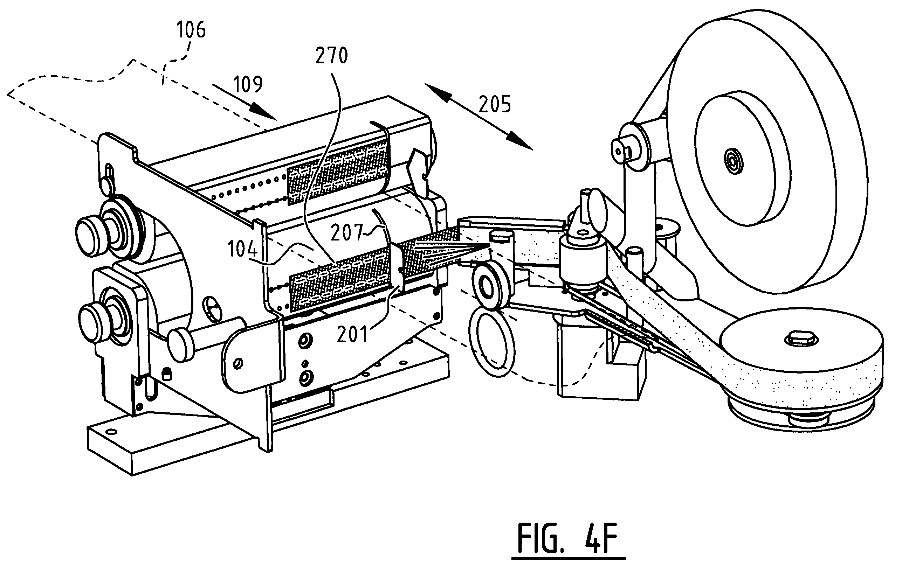

A downwardly biased arm 116 will force the foil 106 in a downward direction onto a wheel 145, see figures 3 and 4. Wheel 145 has a fixed position with bearing with respect to the foil alignment frame 180. It can be driven. In an embodiment the wheel 145 and arm 116 cooperate to e.g. brake the movement of the foil 106, e.g. when the supply of foil is running empty.

A further downstream rigid arm 117 comprising bearings with rollers prevents upward movement of the foil. After arm 117, foil 106 can bend upwards (not shown).

When foil 11 is supplied from the reel 5 the alignment unit and foil feed are continuously aligning/driving the foil.

The tape dispenser is generally indicated with reference numeral 120 and is positioned sideways from the foil 106 along a side of the carriage sub frame 101. The tape dispenser 120 is positioned on a further sub frame 121 that can be moved with respect to carriage sub frame 101 according to arrow 121 in an upward and downward direction using suitable drive.

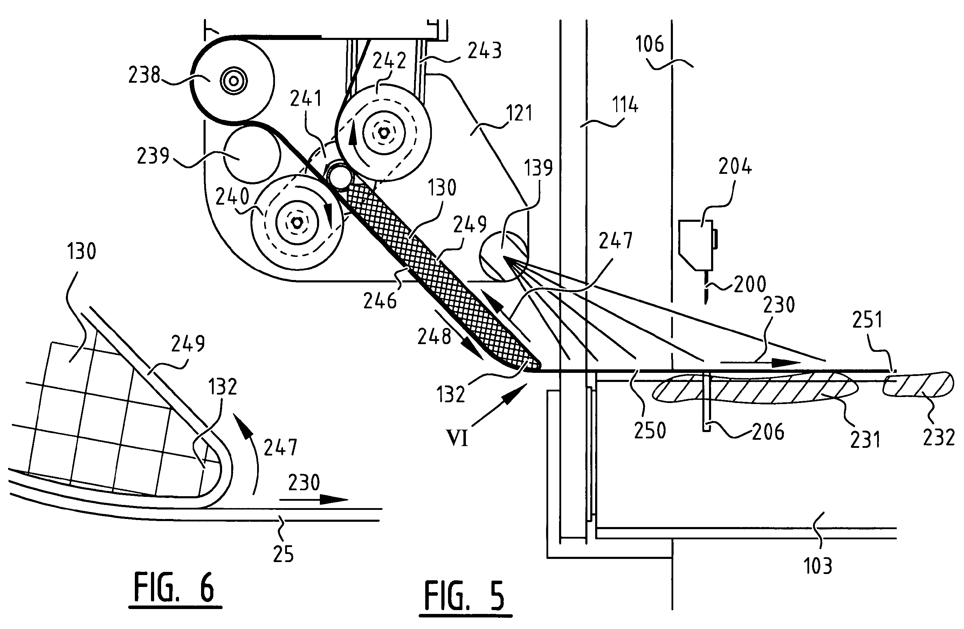

Tape dispenser 120 comprises a tape supply 123. In this embodiment the tape supply 123 comprises tape 125 with protection sheet winded around a reel 124 that can rotate around an axis 126. Tape is supplied in direction 127 and guided by wheels 128 and an angled guide 129 that guides the tape into a generally upright position around wheel 131 with a generally upright axis and towards tooth 130. A detailed view of the tooth 130 is shown in figures 5 and 6 and will be discussed in more detail hereunder.

In the embodiments shown, the tape dispenser sub frame 121 supports not only the tape dispenser 120 but also the tape supply and tape cover sheet discharge, but these are preferred embodiments.

The protective sheet is guided over the tape dispensing end 132 of the tooth 130 back towards a collecting reel 134 having an upright axis that collects protective sheeting by winding in direction 135. In this embodiment reel 134 is driven in direction 135 in order to collect protective sheeting.

Tape applicator 103 is rotatably mounted on carriage sub frame 101. Tape applicator 103 has a rotation axis 150 and tape applicator 104 has a rotation axis 151. Tape applicator 103 comprises a partially rounded generally rectangular tube having holes 153 on tape receiving surface 154 that is shown shaded in figure 3. The tape applicator 103 is connected to a vacuum source (not shown) that can apply a vacuum that will invoke a sucking force using openings 153 that will suck a tape onto the tape receiving surface 154.

The tape applicator 103 can be driven around tape rotation axis 150 by a suitable drive 163. The same or a further drive, or using a transmission, can drive tape applicator 104 around rotation axis 151. Suitable servo motors can be applied and the rotation of tape applicators 103 and 104 can be synchronous.

Figure 4a shows the tape dispenser driving unit 210 connected to roll 212 that can pull the tape protective layer over the tape dispensing end 132 of tooth 130.

Although according to the illustrated embodiment tape applicator 103 will receive a piece of tape, other embodiments are possible. Tape applicator 103 can also comprise a tape dispenser or an adhesive supply or sealing device is provided on the tape applicator 103. The executed methods using the tape applicator 103 (or tape applicator 104) is in no way limited to using a tape.

Tape applicator 104 can move in the direction according to arrow 172 using a suitable drive such as a servo motor. This allows moving the tape applicators towards each other, in this case moving only a single tape applicator 104, to enclose on the foil in between the tape applicator. This will allow applying and connecting tape onto both opposite sides of the flattened tubular tape foil ends.

Now first a method and device will be described for dispensing tape. Clearly other means for making to the connection between a first foil end and a second foil end could be applied in combination with other elements or methods according to this description.

Figure 4a shows an initial position while foil 106 is being supplied in the downstream direction 109 from the flattened tubular foil supply. Suitable sensors are arranged to determine and measure whether the supply from the reel is running out. At a predetermined moment or after measuring a predetermined signal, the tape dispensing will be initiated followed by the tape applying and tape connecting. In figure 4a a splicer state is shown wherein the tape dispenser is ready for tape dispensing.

In the initial tape dispenser state as indicated in figure 4a, the tape dispenser end 132 is located generally in the same horizontal plane as the top tape applicator 103 and the tape receiving surface 153. As a result of this positioning, a part 231 from the tape receiving surface part 153 is located close to the tape dispensing end 132 and a part 232 is located more remote. The more remote part 232 is positioned at a larger distance from the tape dispensing end 132 than the part 231.

Figure 4b shows the initiated tape dispensing. From the tape dispensing end 132 tape 250 is dispensed in direction 230 and moved away from the tape dispensing end 132. The tape leading end 251 will reach the tape applicator 103, first at part 231 and, when the dispensing is continued, move in the direction of the remote part 232.

As shown in more detail in figures 5 and 6, during dispensing the actual tape and protective sheet 246 is moved along 248 over tooth 130 in the direction of end 132 and the tape protective sheet 249 is pulled off from the actual tape 250 near the tape dispensing end 132 and continues in direction 247, while actual tape 250 is dispensed in direction 230.

Figure 5 shows a detail of figure 4b and 4e according to arrow V in figure 4b providing a top view. Tape and protective sheeting 246 is provided from a supply and guided between rollers 240, 241 rotating around upright axes.

Roller 242 is connected by a belt 243 to reel 134. Rollers 240,241 and 242 are in frictional direct contact with each other. Tape + protective sheeting and tape sheeting is guided between the respective rollers 240,241,242. One of these rollers 240 can be connected to a suitable drive unit 210. The combined construction of transmissions (frictional/belt) allows drive 210 to drive rollers 240-242 and reel 134. Further rollers 238,239 guide the tape 246.

During the dispensing action as shown in figure 4b, a blower having one or more nozzles 139, positioned on the tape dispenser sub frame 121, is switched on and directs a gas flow, such as an air flow, towards the tape 250 being dispensed, pushing the tape 250 onto the tape receiving surface 154 of tape applicator 103. As the nozzle 139 is directed along the tape dispensing direction 230, a somewhat laminar flow of gas will provide a "pushing" force pushing the tape 250 onto the tape receiving surface 154. In embodiments of the invention the gas flow is able to at least partially straighten the tape (which tape has the tendency to curl up once it has been dispensed from the dispenser) so that the tape can be maintained on the tape receiving surface 154 or at least in close proximity to the tape receiving surface during movement of the tape along the surface.

A suitable tape 250 is used. Preferably the tape has at least a predetermined amount of rigidity, allowing a horizontal dispensing of the tape while maintaining a generally horizontal direction of the tape without supporting the dispensed end against gravitational forces. Preferably the tape stiffness is at least enough to dispense tape in the horizontal direction over at least 5 cm, preferably 8 cm, more preferably 10 cm. A suitable tape is aluminum tape.

In an embodiment an additional force can be provided for maintaining a generally horizontal extension of the tape 250 while being injected from the tape dispenser by providing a (limited) vacuum inside the tape applicator 103. This results in a sucking force of the tape 250 onto the tape receiving surface 154 through the holes 153/154.

While the tape 250 is being dispensed, the tape leading end 251 is moved in the tape dispensing direction 230 passing the proximal part 231 and eventually reaching the remote part 232 of the tape receiving surface 154. The tape end 251 reaches the tape receiving surface accordingly without any other mechanical driving other than the actual tape dispensing, e.g. by pulling the protective layer using the dispensing driving unit 210 and roller 212. This reduces the mechanical complexity of tape dispensing.

During the tape dispensing foil can still be fed in the feeding direction 109 from the (still not empty) reel.

In this application a (finite) remote part 232 of the tape receiving surface is any part of the tape receiving surface that is located more remote than a (finite) proximal part 231 of the tape receiving surface. The remote part does not have to be the most remote part of the tape receiving surface.

In the embodiments according to figure 4b and 4c, the remote part 232 is a part halfway the tape applicator 103 seen in the direction 230 from the tape dispenser. In this embodiment figure 4b shows the end position of the tape end 251 when tape dispensing is completed in direction 230. In other embodiments the tape end 251 is moved more remote in tape dispensing direction 230, while, also falling within the scope of the invention, tape dispensing could also have ended more prematurely, bringing the tape end 251 only at one-third or even one-fourth or one-fifth of the total tape receiving surface.

When tape dispensing in the tape dispensing direction 230 has ended, the dispensed tape 250 is locked into position onto the tape receiving surface 154 by applying a vacuum in the tape applicator 103 sucking the tape onto the tape receiving surface 154 through the holes 153. Until or even after locking the tape into position onto the tape receiving surface by the vacuum, the gas nozzle 139 can provide its supporting pushing force.

Figures 4a and 4c show tape cutting knives 200 and 201. Tape cutting knife 200 is received in a (not shown) cutting device comprising a house and e.g. an air cylinder that allows displacing the knife 200. The cutting knives can move in direction 205 into a cutting slit 206 provided in tape applicator 103 and cutting slit 207 in tape applicator 104 respectively. This will allow cutting the tape that is provided on the tape receiving surface.

After the tape reaching the end position on the tape receiving surface 154, the tape dispensing in direction 230 is stopped.

When the tape has reached the end position, and preferably after locking the tape into position, the dispensed tape 250 is cut using the schematically illustrated cutting device by driving the knife 200 into the slit 206. This action will separate a part of the dispensed tape 260 from the tape 261 still connected to the tape dispenser. The separated tape part is held onto the tape receiving surface 154 by applying the vacuum.

In an embodiment the tape part extending beyond the tape dispensing end 132 can be retracted e.g. by driving the tape dispenser drive in an opposite direction. In other embodiments part is not retracted or is cut off by an auxiliary cutting device. In the following figures however, the tape extending beyond the tape dispensing end is removed.

Figure 4d shows the tape dispenser 120 in a second position wherein the tape dispenser sub frame 121 is moved in a generally vertical direction 122 with respect to the tape applicator 103, 104 such that the tape dispenser end 132 is now generally in the same plane as the tape applicator 104 and the tape receiving surface 158. The position of the tape dispenser 120 is generally similar to the initial state although the tape dispenser 120 is now in line with the tape applicator 104.

Although the tape dispenser sub frame 121 is guided in the direction 122 generally perpendicular to the foil trajectory, also other guide directions are possible, e.g. v-shaped.

Generally the same sequence of tape dispensing is executed again, now dispensing tape onto the tape applicator 104. Accordingly, a single tape dispenser is used for applying tape to the tape applicators 103, 104 positioned on opposite sides of the foil moving between the two tape applicators. This results in a substantial saving for cost, while a single guide and drive is needed only. The tape dispenser drive and guide for arranging and controlling the movement in direction 122 of the tape dispenser sub frame 121 with respect to the tape applicators 103,104 and tape receiving surfaces is not shown in figures 4a-4g.

Generally the tape dispenser end 132 moves from a first position in which the tape dispenser end is directed at the tape applicator 103 and the tape receiving surface 154 to a second position directed at the other tape applicator 104 and other tape receiving surface 158.

In an embodiment the foil 106 is still being dispensed from the reel in the foil transport direction 109, as shown in figure 4d, when the tape dispenser moves downward to the other tape receiving surface.

In figure 4e tape dispensing a second piece of tape 270 with a second tape leading end 271 onto the second tape applicator 104 having a second tape receiving surface 158 is illustrated. The tape is fed from the tape dispensing end 132 and extends there from. The second tape leading end 271 first reaches a proximal part 281 of the second tape receiving surface 158 and is dispensed further so as to reach a less proximal, that is more remote part 282 of the second tape receiving surface 158.

Tape dispensing is in the shown embodiments generally in a horizontal direction wherein the tape extending from the tape dispensing end 132 is unsupported against gravity other than by its internal stiffness and a connection that is maintained with the supply of tape. Some support is offered by a pushing force exerted by a gas flow provided from the nozzle 139.

When tape is dispensed e.g. in a downward vertical direction, in another embodiment, the gas nozzle can prevent curling of the tape back to a winded state.

The tape dispensing is ended when the second tape end 271 reaches a predetermined remote part 282 of the tape receiving surface 158 while further a surface area of tape 270 covers more proximal parts of the tape receiving surface 158. The second tape is then locked into position by providing a vacuum resulting in a sucking force of the tape 270 onto the tape receiving surface 158. Generally, a length of tape is dispensed generally similar to the first tape, still being held on tape receiving surface of tape applicator 103.

Thereafter the dispensed tape 270 is cut using cutting device having a knife 201 that is moved in direction 205 into a slit 207 provided in tape applicator 104 as shown in figure 4a. This can be followed by possible retraction of the tape end still extending beyond the tape dispensing end 132.

During the second tape dispensing steps, foil can still be provided from the reel in direction 109. In this embodiment providing the second tape onto the tape applicators and the tape dispensing sequence and can start before the actual tape connection sequence. Preferably the tape dispensing sequence is started a predetermined time before the reel from the foil is empty. Foil can still be continuously supplied during the tape dispensing sequence.

As a last step of the tape dispensing sequence the tape dispenser can be moved back to its initial position, or a following tape dispensing sequence can start with the tape dispensing sub frame located adjacent the second tape applicator 104.

In figure 4g a cutting device 30 (as shown in figure 1a) having a knife 300 positioned upstream from the tape applicators 103,104 along the foil trajectory, cut the foil 106, at a predetermined distance 302 upstream from the tape applicators. The result is that a predetermined length 302 of foil is available, and a suitable controller can drive the foil in foil transport direction 109 e.g. using the wheel 145 and counter wheel 116 to pull the foil and foil edge 304 in foil transport direction 109. Because the length of the foil is known, exact positioning of the foil edge 304 is possible.

The cutting device 30 can be part of the table 14 as illustrated in figure 1.

Figure 7 illustrates the (partially shown) carriage sub frame 101 moving in a transverse direction 108 with respect to the guidance and cutting table 14 driven by a suitable driver. The foil end 304 of the old foil is conveyed somewhat downstream and held in a predetermined position with respect to the carriage sub frame 101 and tape applicators 103,104. The splicer device 1 allows transverse movement 108 of the carriage sub frame 101 holding the foil end 304 while maintaining the foil connection with further downstream processing units such as a buffer device.

The carriage sub frame is, when 'old' foil is supplied positioned at the first position. The end of the next or further foil is positioned at the second position and the carriage sub frame can be moved, guided or transferred from the first position towards and to the second position.

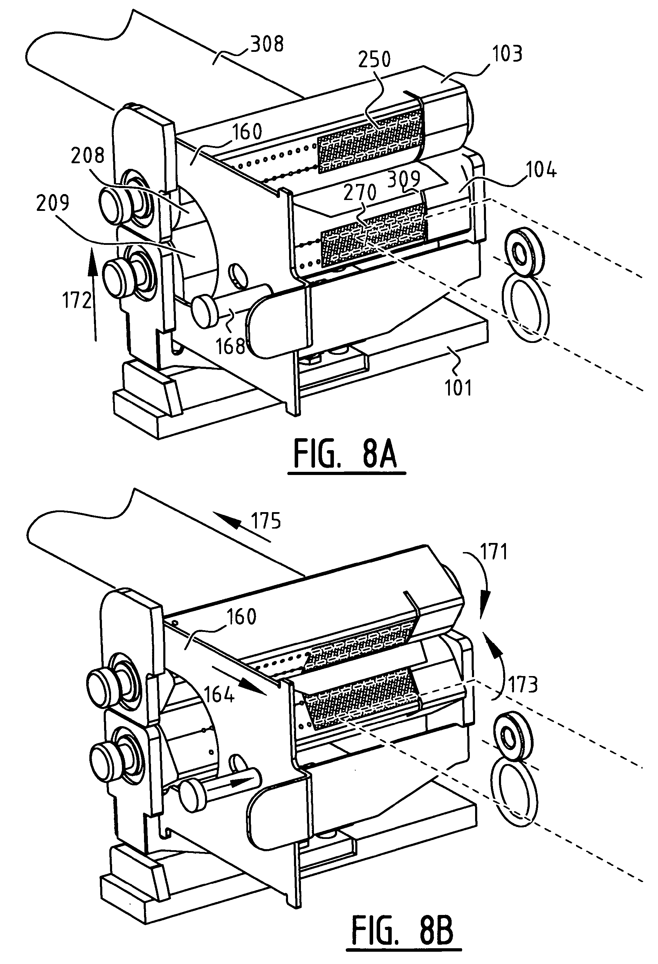

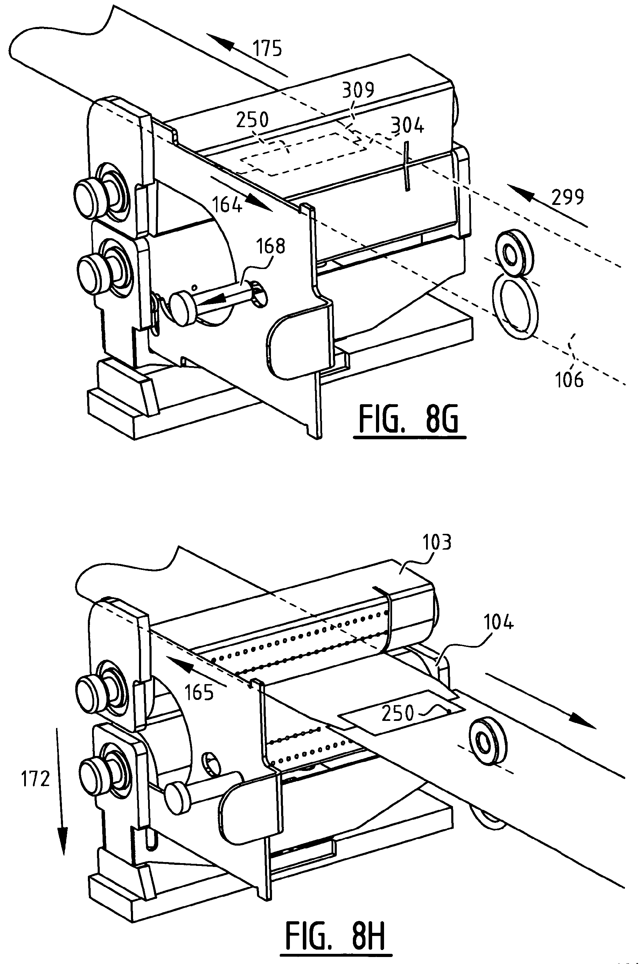

A foil 308 is supported by the guidance and cutting table 14 in a predetermined position. The foil end 309 has partially removed edges which will allow opening the layers of the tubular foil 308 near end 309. In the predetermined position end 309 will run in between wings 51,52 on carriage sub frame 101 which will bring the end 309 between tape applicators 103,104. Again as a result of the predetermined position of end 309, carriage sub frame 101 is moved over a certain distance allowing the end 309 to be aligned with end 304. The edges of both foils 308 and foil 106 can be aligned. In an embodiment further sensors allow the alignment. The aligned position is shown in Figure 8a as the initial position of the method for applying and connecting the ends of tubular foil in a splicing device 1 using tape.

Aligning end 304 of the 'old' foil 106 with pieces of tape 154,158 and especially with foil end 309 of a 'new' foil 308 can comprise an engaging device (not shown) arranged to engage foil 106 close to end 304, said engaging device connected to sensors for sensing a (relative) position of end 309 and the engaging device arranged to move at least sideward 110 so as to align the longitudinal edges of the respective foils 106 and 308. In an embodiment the tape receiving surfaces are mounted in the splicer 1 movable in direction 110 so as to allow alignment of the foil ends after applying tape.

Further such an engaging device can fix the relative position of the end 304 with respect to the table frame 101. The engaging device can be positioned on opposite sides of the foil trajectory and can comprise suction units.

A first step of the illustrated method according to figure 8a comprises driving tape applicator 104 in direction 172. Tape applicator 104 is moved towards tape applicator 103. Foil 308 is held between the two tape applicators. The foil end 309 extends in the downstream direction beyond the tape applicators. The foil 308/foil end 309 is still in the predetermined position when held on the guidance and cutting table 14. Stop 20-24 can still be locked, locking the foil 308 in position. During or after the first step of the method stop 20-24 is unlocked.

A suitable drive moves tape applicator 104 with respect to carriage sub frame 101.

Tape applicators 103,104 are rotatably held around axis 150,151 with respect to the carriage sub frame 101. Several bearing constructions and drives are possible.

In the illustrated embodiment synchronous rotation of the tape applicators 103,104 is arranged using frame plate 160 that is guided by horizontal guides 161, 162, see figure 2. The guides 161,162 allow frame plate 160 to move in direction 164. Frame plate 160 is connected to servo motor or air cylinder 163.

By moving frame plate 160 in the downstream direction of arrow 164, pin 178 on one end of the tape applicator 103 is engaged, as well is a similar pin on tape applicator 104 (not shown). Tape applicator 103 will rotate according to arrow 171. Simultaneously, a likewise engagement on tape applicator 104 will rotate tape applicator 104 in the opposite direction 173 as shown in figure 8b.

In this embodiment, as tape applicator 104 is moved according to arrow 172, the foil 308 is held between the tape applicators 103,104. Accordingly the rotation of the tape applicators will move the foil 306 in an upstream direction 175. Specifically the rounded surface area 208,209 of the tape applicators will engage on the foil 208. This cylindrical surface area will point contact the foil 308. Foil 106 is still held in the predetermined position.

The tape applicators 103,104 continue to rotate while frame plate 160 moves in direction 164. A blocking pin 168 will prevent further movement of the plate 160 as blocking pin 168 is biased 167 to enter through hole 169. As soon as blocking pin 168 enters the hole 169, further movement/rotation is blocked. This will prevent the two tapes 250,270 from sticking together. Figure 3 shows an air cylinder 175 for operating the pin 168.

Hole 169 is larger than the circumference of pin 168. When pin 168 is received in hole 169, the plate 160 can still be moved in either direction 164 or 165. The orifice of hole 169 provides a domain within which plate 160 can move, and thereby a domain of angles for rotation of the tape applicators 103,104.

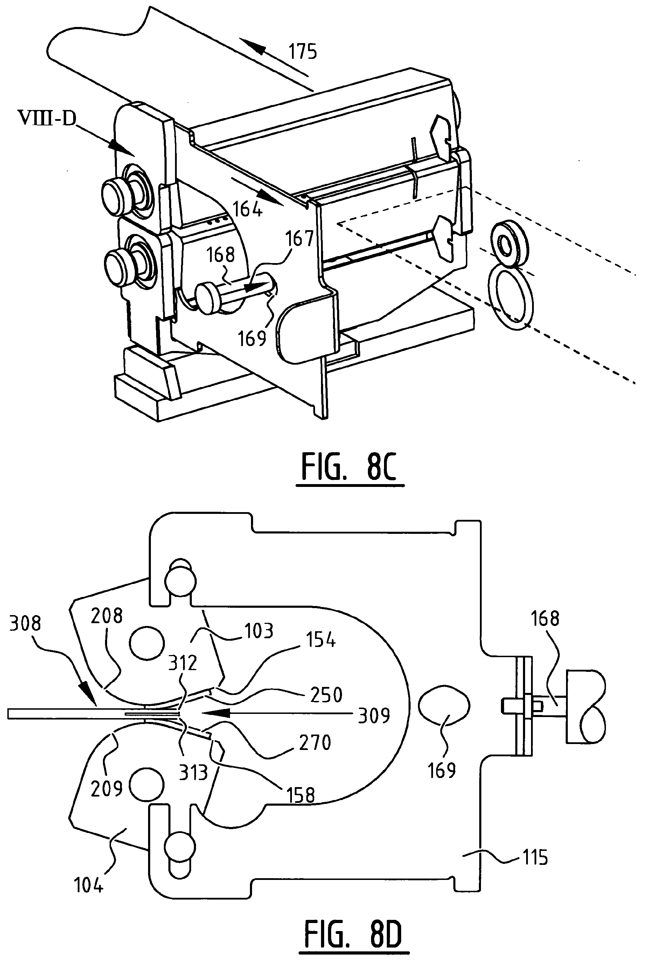

Rotation of the tape applicators 103,104 continues to such an extent, about 75-85°, that the tape receiving surface and tapes 250,270 still held onto the tape receiving surfaces 154,158 will come into contact with the foil 308 and in particular close to foil end 309. A cross sectional view is shown in figure 8d indicated by arrow VIIId in figure 8c.

The adhesive side of tape 250,270 will come into contact with the upper 312 and lower 313 layers of the foil 308/foil end 309 respectively. Tape is now applied to the foil end 309 of one of the foils to be connected using the splicer 1.

Blocking pin 168 prevents the further rotation. As a result rotation of the tape applicators such that tape 250/270 will come in contact with each other is prevented. According to the method the predetermined position of foil end 309 is such that only a part of the tapes 250/270 will come in contact with the respective layers 312,313 of the foil 308. If rotated too far, the tapes would come into contact with each other. The blocking pin 168 prevents rotation beyond the indicated position in Figure 8d.

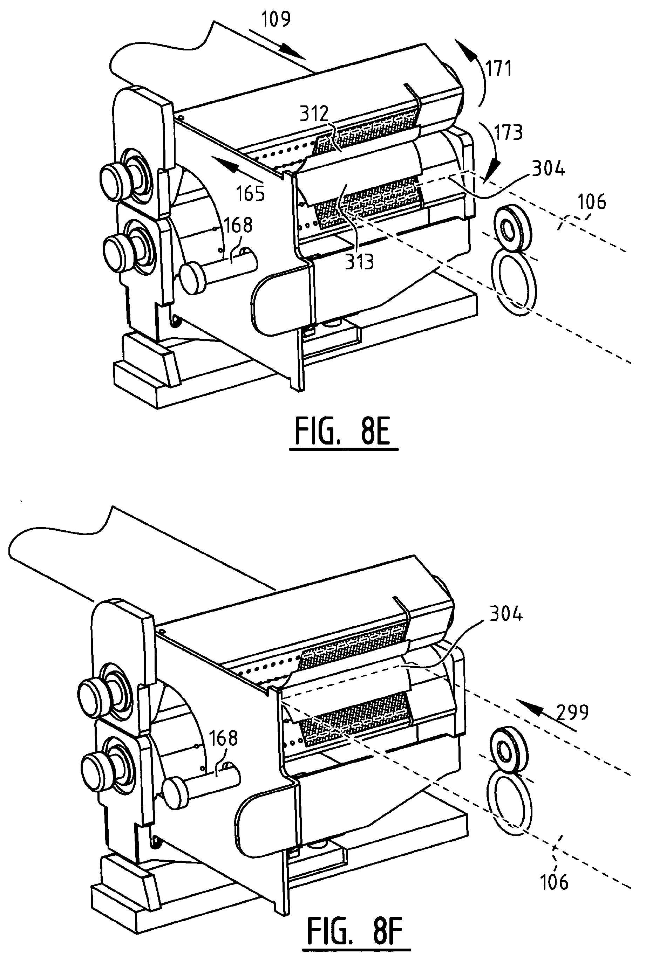

As a result of the adhesive contact a subsequent reverse movement of the frame plate 160 by driving the plate 160 in direction 165 as shown, the engaged layers (or lips) 312,313 and foil 308 will be pulled in a downstream direction as a result of rotation 171/173. The tapes 250,270 will stick to the layers 312,313 opening the mouth of foil end 309 as shown in figure 8e. About 50% of the tape 250,270 is sticks to layers 312,313.

Pin 168 is still extended in figure 8e in hole 169. Hole 169 is shaped such that plate 160 can move and rotation of the tape applicators to the opened mouth position according to Figure 8e can be obtained. Pin 168 delimits the rotation of the tape applicator to e.g. a domain between 45 and 85 degrees.

The opened foil end 309 can now receive the foil end 306 of the first foil 106 still held in a predetermined position between the separated lips. As a result of the predetermined position a drive can feed the 'old' foil 106 in an upstream direction according to arrow 299 into the opened foil end 309 as illustrated in Figure 8f. The method provides for feeding the old foil a predetermined distance in the upstream direction.

The foil end 304 is supported e.g. by table 180 of the foil alignment unit 105. This table, having an edge shortly downstream from the tape applicators 103,104 guides the end 304 into the opened mouth.

The upstream feeding according to arrow 299 is continued in a subsequent step in combination with moving the frame plate 160 and thereby rotating the tape applicators and moving the 'new' foil in an upstream direction 175. Now pin 168 is unbiased (or retracted) and moving of the frame plate is not stopped by the pin 168 entering the through hole 169. Instead the plate 160 is moved beyond the position according to the figure 8d.

Accordingly after feeding the foil 106 in the upstream direction into the opened lips of the new foil 308, feeding in the upstream direction is continued now together with feeding the new foil 308 also in the upstream direction.

Accordingly the invention allows the combined upstream feeding of the old foil 106 and new foil 308 in particular for applying the pieces of tape 154,158, already applied to the leading edge 309 of the new foil, to the 'old' foil 106, thereby making the connection between the foil ends.

As a result the complete tape 250,270 is applied onto the foil ends 309/304. The foil ends 304,309 are connected.

In a subsequent step the tape applicator 104 is moved downwards 172 allowing the foil to freely move between the tape applicators 103,104 and the frame plate 160 is returned to its initial position, rotating the tape applicators back to the initial position, as shown in figure 8h.

In an embodiment the foil 106,308 is provided with markers, e.g. markers along the edge of the foil, e.g. positioned at a predetermined pitch. The markers allow an exact positioning of the foil with respect to a marker sensor positioned along the foil trajectory.

In an embodiment the number of markings is counted, allowing to count whether the supply of foil is running empty, as a reel of foil has a predetermined number of markings at predetermined pitch positioned on the supplied foil. The skilled person will be able to arrange suitable markers, suitable sensors and adapt the above described method for positioning accordingly.

Clearly many embodiments are possible within the scope of the invention.

## Claims

1. Device for connecting two ends of foil by means of tape, the device having:
- a supply (91) for foil and a processing unit for foil conveying the foil along a foil trajectory;
- one or more tape applicators (103, 104) configured for applying tape to and connecting the ends of foil, positioned downstream from the supply along the foil trajectory, the tape applicator comprising a tape receiving surface having one or more tape holders arranged to, when switched on, fix the position of the tape on the tape receiving surface, and
- a tape dispenser (120) for supplying tape onto the tape receiving surface,
wherein the tape dispenser (120) is arranged next to the tape applicator;
**characterized in that** the tape dispenser and tape receiving surface are in fixed relationship during dispensing of the tape by the tape dispenser (120) thereby applying the tape onto the tape receiving surface and **in that** the tape dispenser comprises a blower for directing a gas flow to the tape receiving surface so as to blow the tape onto the tape receiving surface while being dispensed.

2. Device as claimed in claim 1, wherein the blower comprises a nozzle (139) for directing the gas flow to the tape receiving surface, wherein the blower is further configured to maintain the tape in the proximity of the tape receiving surface or onto the tape receiving surface while the tape is being moved across the tape receiving surface towards the proximal part.

3. Device as claimed in claim 1 or 2, wherein the tape dispenser comprises a tape dispensing end (132) arranged to dispense tape in a direction (230) away from the tape dispensing end towards a proximal part (231) of the tape receiving surface (153) and, when dispensing is continued, moving the tape in the direction of a remote part (232) of the tape receiving surface 153) to supply tape to the remote part of the tape receiving surface.

4. Device as claimed in any of the preceding claims, wherein the tape dispenser is arranged to dispense a tape with a predetermined amount of rigidity without supporting the dispensed end of the tape, wherein the dispenser is preferably arranged to dispense the tape in a horizontal or vertical direction.

5. Device as claimed in any of the preceding claims, wherein the tape dispenser is arranged to extend a tape of sufficient stiffness from the dispensing end (132) of the tape dispenser.

6. Device as claimed in any of the preceding claims, wherein the tape dispenser is configured to move the tape leading end (251) of the tape in the tape dispensing direction (230) passing the proximal part (231) of the tape receiving surface and eventually reaching the remote part (222) of the tape receiving surface (154), the tape end (251) reaching the tape receiving surface without any other mechanical driving other than the actual tape dispensing.

7. Device as claimed in any of the preceding claims comprising a tape dispenser driving unit (210) arranged for pulling the tape from the tape supply and pushing the same from the tape dispenser end to the proximal part of the receiving surface of one of the tape applicators and then from the proximal to the remote part.

8. Device according to any of the preceding claims, wherein the device comprise at least two tape applicators that are positioned on opposite sides of the foil trajectory, the tape applicators having generally parallel extending tape receiving surfaces and wherein the tape dispenser is mounted on a moveable sub frame connected to the device by a guide extending generally perpendicular to the tape receiving surfaces for positioning the tape dispenser adjacent each tape receiving surface.

9. Device as claimed in any of the preceding claims, wherein the tape is one-sided adhesive tape, the non-sticky side of the tape being supplied onto the tape receiving surface and/or wherein the tape holder is arranged to fix the position of the tape after dispensing and/or wherein the tape receiving surface extends in a dispensing direction of the tape dispenser and/or wherein a controller is arranged to start tape dispensing from the tape dispenser prior to switching on the tape holder, the controller preferably being arranged to dispense tape from the tape dispenser by extending tape of at least a desired length of tape from the tape dispenser prior to switching on the tape holder.

10. Device according to any of the preceding claims, wherein the tape dispenser comprises a tape and release liner supply and a release liner discharge and wherein the tape dispenser comprises a nose with a dispensing end for separating the tape from the release liner, and/or wherein the release liner discharge comprises a drive for pulling the release liner over the dispensing end.

11. Method for connecting two ends of foil by means of tape, the method comprising dispensing by a tape dispenser (120) tape on a tape receiving surface (153) of a tape applicator (103,104), holding the tape on the tape receiving surface (153), applying the tape to an end of the foil, connecting the ends and releasing the tape, **characterized in that** dispensing the tape onto the tape receiving surface comprises dispensing the tape from a tape dispensing end (132) of the tape dispenser (120), the tape dispensing end being arranged next to the tape applicator (103,104) and having a fixed relationship with the tape applicator during dispensing thereof, forwarding the tape in a direction (230) away from the tape dispensing end (132) towards a proximal part (231) of the tape receiving surface (153) and then in the direction of a remote part (232) of the tape receiving surface (153) while blowing the tape onto the tape receiving surface.

12. Method as claimed in claim 11, wherein blowing the tape comprises blowing air from a blower (139) in the direction of the tape receiving surface for maintaining the tape in the proximity of the tape receiving surface or onto the tape receiving surface while the tape is being moved across the tape receiving surface towards the proximal part.

13. Method according to claim 11 or 12, wherein dispensing tape comprises forwarding tape with a predetermined amount of rigidity without supporting the dispensed end of the tape, wherein the dispenser is preferably arranged to dispense the tape in a horizontal or vertical direction and/or wherein dispensing the tape comprises directing the tape towards the tape receiving surface.

14. Method according to any of claims 11-13, wherein the tape is held by the tape receiving surface only after terminating supplying the tape and/or wherein dispensing the tape also comprises removing a release liner from the tape, preferably comprising pulling the release liner and/or wherein a predetermined length of the tape connects the foil ends, wherein at least the predetermined length of tape is supplied and extends from a dispensing end of a tape dispenser.

15. Controller arranged to execute the method according to any of the claims 11-14, the controller preferably being arranged for switching on/off a tape holder on a tape receiving surface of a tape applicator.

## Patentansprüche

1. Vorrichtung zum Verbinden zweier Folienenden mittels eines Bandes, wobei die Vorrichtung aufweist:
- einen Folienvorrat (91) und eine Folien-Verarbeitungseinheit, welche die Folie längs einer Folienbahn transportiert,
- ein oder mehrere Bandapplikatoren (103, 104) die ausgelegt sind zum Aufbringen eines Bandes auf die und zum Verbinden der Folienenden und die abwärts von dem Vorrat längs der Folienbahn positioniert sind, wobei der Bandapplikator eine Bandaufnahmefläche umfasst, die ein oder mehrere Bandhalter aufweist, welche angeordnet sind, um dann, wenn sie eingeschaltet sind, die Position des Bandes auf der Bandaufnahmefläche zu fixieren,
- und eine Band-Abgabeeinrichtung (120) zum Zuführen des Bandes auf die Bandaufnahmefläche, wobei die Band-Abgabeeinrichtung (120) neben dem Bandapplikator angeordnet ist,
**dadurch gekennzeichnet, dass** die Band-Abgabeeinrichtung und die Bandaufnahmefläche während der Abgabe des Bandes durch die Band-Abgabeeinrichtung (120) in festliegender Beziehung sind, um dadurch das Band auf die Bandaufnahmefläche aufzubringen,
und dass die Band-Abgabeeinrichtung ein Gebläse zum Richten einer Gasströmung zu der Bandaufnahmefläche umfasst, derart, um das Band während der Abgabe auf die Bandaufnahmefläche zu blasen.

2. Vorrichtung nach Anspruch 1, wobei das Gebläse eine Düse (139) zum Richten der Gasströmung zu der Bandaufnahmefläche umfasst, wobei das Gebläse ferner so ausgelegt ist, um das Band in der Nähe der Bandaufnahmefläche oder auf der Bandaufnahmefläche zu halten, während das Band über die Bandaufnahmefläche zu dem proximalen Teil hin bewegt wird.

3. Vorrichtung nach Anspruch 1 oder 2, wobei die Band-Abgabeeinrichtung ein Bandabgabeende (132) umfasst, welches angeordnet ist, um das Band in eine Richtung (230) von dem Bandabgabeende weg zu einem proximalen Teil (231) der Bandaufnahmefläche (153) hin abzugeben,
und wobei dann, wenn die Abgabe fortgesetzt wird, das Band in die Richtung eines fern liegenden Teiles (232) der Bandaufnahmefläche (153) bewegt wird, um das Band dem fern liegenden Teil der Bandaufnahmefläche hin zuzuführen.

4. Vorrichtung nach einem der vorhergehenden Ansprüche, wobei die Band-Abgabeeinrichtung angeordnet ist, um ein Band mit einer bestimmten Steifigkeitsgröße ohne Unterstützung des abgegebenen Bandendes abzugeben, wobei die Abgabeeinrichtung vorzugsweise angeordnet ist, um das Band in einer horizontalen oder vertikalen Richtung abzugeben.

5. Vorrichtung nach einem der vorhergehenden Ansprüche, wobei die Band-Abgabeeinrichtung angeordnet ist, um ein Band von ausreichender Steifigkeit von dem Abgabeende (132) der Band-Abgabeeinrichtung auszufahren.

6. Vorrichtung nach einem der vorhergehenden Ansprüche, wobei die Band-Abgabeeinrichtung so ausgelegt ist, um das Bandführungsende (251) des Bandes in der Bandabgaberichtung (230) zu bewegen, den proximalen Teil (231) der Bandaufnahmefläche zu passieren und schließlich den fernliegenden Teil (222) der Bandaufnahmefläche (154) zu erreichen, wobei das Bandende (251) die Bandaufnahmefläche ohne irgendeinen anderen mechanischen Antrieb als die tatsächliche Bandabgabe erreicht.

7. Vorrichtung nach einem der vorhergehenden Ansprüche, umfassend eine Band-Abgabeeinrichtungs-Antriebseinheit (210), die angeordnet ist, um das Band von dem Bandvorrat zu ziehen und es von dem Band-Abgabeende zu dem proximalen Teil der Aufnahmefläche eines der Bandapplikatoren und dann von dem proximalen zu dem entfernt liegenden Teil zu schieben.

8. Vorrichtung nach einem der vorhergehenden Ansprüche, wobei die Vorrichtung zumindest zwei Bandapplikatoren umfasst, die auf gegenüberliegenden Seiten der Folienbahn positioniert sind, wobei die Bandapplikatoren generell parallel verlaufende Bandaufnahmeflächen aufweisen und wobei die Band-Abgabeeinrichtung an einem beweglichen Unterrahmen angebracht ist, der mit der Vorrichtung durch eine Führung verbunden ist, welche zur Positionierung der Band-Abgabeeinrichtung neben jeder Bandaufnahmefläche generell rechtwinklig zu den Bandaufnahmeflächen verläuft.

9. Vorrichtung nach einem der vorhergehenden Ansprüche, wobei das Band ein einseitig klebendes Band ist, wobei die nicht klebrige Seite des Bandes der Bandaufnahmefläche zugeführt wird und/oder wobei der Bandhalter so angeordnet ist, um die Position des Bandes nach der Abgabe zu fixieren, und/oder wobei die Bandaufnahmefläche in einer Abgaberichtung der Band-Abgabeeinrichtung verläuft und/oder wobei eine Steuereinrichtung angeordnet ist, um die Bandabgabe von der Band-Abgabeeinrichtung vor dem Einschalten des Bandhalters zu starten, wobei die Steuereinrichtung vorzugsweise so angeordnet ist, um das Band von der Band-Abgabeeinrichtung durch Ausfahren des Bandes in zumindest einer gewünschten Bandlänge von der Band-Abgabeeinrichtung vor dem Einschalten des Bandhalters abzugeben.

10. Vorrichtung nach einem der vorhergehenden Ansprüche, wobei die Band-Abgabeeinrichtung einen Band- und Trennschichtvorrat und eine Trennschichtabführung umfasst und wobei die Band-Abgabeeinrichtung eine Nase mit einem Abgabeende zum Trennen des Bandes von der Trennschicht umfasst und/oder wobei die Trennschichtabführung einen Antrieb zum Ziehen der Trennschicht über das Abgabeende umfasst.

11. Verfahren zum Verbinden zweier Folienenden mittels eines Bandes, wobei das Verfahren umfasst:
Abgeben eines Bandes von einer Band-Abgabeeinrichtung (120) an eine Bandaufnahmefläche (153) eines Bandapplikators (103, 104), der das Band auf der Bandaufnahmefläche (153) hält, Aufbringen des Bandes auf ein Folienende,
Verbinden der Enden und Freigeben des Bandes,
**dadurch gekennzeichnet, dass** das Abgeben des Bandes auf die Bandaufnahmefläche ein Abgeben des Bandes von einem Bandabgabeende (132) der Band-Abgabeeinrichtung (120), wobei das Bandabgabeende neben dem Bandapplikator (103, 104) angeordnet ist und während seiner Abgabe eine festliegende Beziehung zu dem Bandapplikator aufweist, ein Weiterleiten des Bandes in eine Richtung (230) von dem Bandabgabeende (132) weg zu einem proximalen Teil (231) der Bandaufnahmefläche (153) hin und sodann in die Richtung eines fern liegenden Teiles (232) der Bandaufnahmefläche (153) umfasst, während das Band auf die Bandaufnahmefläche geblasen wird.

12. Verfahren nach Anspruch 11, wobei das Blasen des Bandes ein Blasen von Luft von einem Gebläse (139) in die Richtung der Bandaufnahmefläche zum Beibehalten des Bandes in der Nähe der Bandaufnahmefläche oder auf der Bandaufnahmefläche umfasst, während das Band über die Bandaufnahmefläche zu dem proximalen Teil hin bewegt wird.

13. Verfahren nach Anspruch 11 oder 12, wobei die Bandabgabe ein Weiterleiten des Bandes mit einer bestimmten Festigkeitsgröße ohne Unterstützung des abgegebenen Endes des Bandes umfasst,
wobei die Abgabeeinrichtung vorzugsweise angeordnet ist, um das Band in einer horizontalen oder vertikalen Richtung abzugeben,
und/oder wobei die Abgabe des Bandes ein Hinleiten des Bandes zu der Bandaufnahmefläche umfasst.

14. Verfahren nach einem der Ansprüche 11 bis 13, wobei das Band durch die Bandaufnahmefläche lediglich nach Abschluss der Zuführung des Bandes gehalten wird und/oder wobei die Abgabe des Bandes außerdem ein Entfernen einer Trennschicht von dem Band, vorzugsweise ein Ziehen der Trennschicht umfasst,
und/oder wobei eine bestimmte Länge des Bandes die Folienenden verbindet,
wobei zumindest die bestimmte Bandlänge zugeführt wird und von einem Abgabeende einer Band-Abgabeeinrichtung verläuft.

15. Steuereinrichtung, die so angeordnet ist, um das Verfahren gemäß einem der Ansprüche 11 bis 14 auszuführen, wobei die Steuereinrichtung vorzugsweise zum Ein-/Ausschalten eines Bandhalters an einer Bandaufnahmefläche eines Bandapplikators angeordnet ist.

## Revendications

1. Dispositif de raccordement de deux extrémités d'une feuille au moyen d'une bande adhésive, le dispositif comportant :
une source d'alimentation (91) pour la feuille et une unité de traitement pour la feuille destinée à transférer la feuille le long d'une trajectoire de feuille ;
un ou plusieurs applicateurs de bande (103, 104) configurés de manière à appliquer une bande adhésive sur les extrémités de feuille et à les relier, positionnés en aval de la source d'alimentation le long de la trajectoire de feuille, l'applicateur de bande adhésive comprenant une surface de réception de bande adhésive comportant un ou plusieurs supports de bande agencés, lorsqu'ils sont activés, de manière à fixer la position de la bande sur la surface de réception de bande, et
un distributeur de bande (120) destiné à délivrer la bande adhésive sur la surface de réception de bande, dans lequel le distributeur de bande (120) est agencé après l'applicateur de bande;
**caractérisé en ce que** le distributeur de bande et la surface de réception de bande sont agencés suivant une relation fixe au cours de la distribution de la bande par le distributeur de bande (120), appliquant ainsi la bande sur la surface de réception de bande, et **en ce que** le distributeur de bande comprend un ventilateur destiné à diriger un courant de gaz vers la surface de réception de bande de manière à souffler la bande sur la surface de réception de bande lorsqu'elle est distribuée.

2. Dispositif selon la revendication 1, dans lequel le ventilateur comprend un injecteur (139) destiné à diriger le courant de gaz vers la surface de réception de bande, dans lequel le ventilateur est en outre configuré de manière à maintenir la bande à proximité de la surface de réception de bande ou sur la surface de réception de bande pendant que la bande est déplacée à travers la surface de réception de bande vers la partie proximale.

3. Dispositif selon la revendication 1 ou 2, dans lequel le distributeur de bande comprend une extrémité de distribution de bande (132) agencée de manière à distribuer une bande dans une direction (230) s'écartant de l'extrémité de distribution de bande vers une partie proximale (231) de la surface de réception de bande (153) et, lorsque la distribution se poursuit, déplaçant la bande dans la direction d'une partie distante (232) de la surface de réception de bande (153) afin de délivrer la bande à la partie à distante de la surface de réception de bande.

4. Dispositif selon l'une quelconque des revendications précédentes, dans lequel le distributeur de bande est agencé de manière à distribuer une bande avec un niveau prédéterminé de rigidité sans supporter l'extrémité de distribution de la bande, dans lequel le distributeur est, de préférence, agencé de manière à distribuer la bande suivant une direction horizontale ou verticale.

5. Dispositif selon l'une quelconque des revendications précédentes, dans lequel le distributeur de bande est agencé de manière à étendre une bande d'une rigidité suffisante à partir de l'extrémité de distribution (132) du distributeur de bande.

6. Dispositif selon l'une quelconque des revendications précédentes, dans lequel le distributeur de bande est configuré de manière à déplacer l'extrémité avant de bande (251) de la bande dans la direction de distribution de bande (230) passant par la partie proximale (231) de la surface de réception de bande et atteignant éventuellement la partie distante (222) de la surface de réception de bande (154), l'extrémité de bande (251) atteignant la surface de réception de bande sans aucun autre dispositif d'entraînement mécanique que le présent dispositif de distribution de bande.

7. Dispositif selon l'une quelconque des revendications précédentes comprenant une unité d'entraînement de distributeur de bande (210) agencée de manière à entraîner la bande à partir de la source d'alimentation de bande et à pousser celle-ci à partir de l'extrémité de distributeur de bande vers la partie proximale de la surface de réception de l'un des applicateurs de bande et ensuite à partir de l'extrémité proximale vers la partie distante.

8. Dispositif selon l'une quelconque des revendications précédentes, dans lequel le dispositif comprend au moins deux applicateurs de bande qui sont positionnés sur des côtés opposés de la trajectoire de feuille, les applicateurs de bande comportant des surfaces de réception bande s'étendant sensiblement parallèlement et dans lequel le distributeur de bande est monté sur un châssis secondaire mobile relié au dispositif par un guide s'étendant sensiblement perpendiculairement aux surfaces de réception de bande afin de positionner le distributeur de bande de manière adjacente à chaque surface de réception de bande.

9. Dispositif selon l'une quelconque des revendications précédentes, dans lequel la bande adhésive est à une seule face, le côté non collant de la bande étant délivré sur la surface de réception de bande et/ou dans lequel le support de bande est agencé de manière à fixer la position de la bande après distribution et/ou dans lequel la surface de réception de bande s'étend suivant une direction de distribution du distributeur de bande et/ou dans lequel une unité de commande est agencée de manière à démarrer la distribution de bande à partir du distributeur de bande avant l'activation du support de bande, l'unité de commande étant, de préférence, agencée de manière à distribuer la bande à partir du distributeur de bande en étendant la bande au moins sur une longueur de bande désirée à partir du distributeur de bande avant l'activation du support de bande.

10. Dispositif selon l'une quelconque des revendications précédentes, dans lequel le distributeur de bande comprend une bande et une source d'alimentation de feuille de séparation et un dispositif de déchargement de feuille de séparation et dans lequel le distributeur de bande comprend un embout avec une extrémité de distribution destinée à séparer la bande de la feuille de séparation, et/ou dans lequel le dispositif de déchargement de feuille de séparation comprend un dispositif d'entraînement destiné à entraîner la feuille de séparation sur l'extrémité de distribution.

11. Procédé de raccordement de deux extrémités d'une feuille au moyen d'une bande adhésive, le procédé comprenant la distribution, par un distributeur de bande (120), d'une bande sur une surface de réception de bande (153) d'un applicateur de bande (103, 104), le maintien de la bande sur la surface de réception de bande (153), l'application de la bande sur une extrémité de la feuille, la liaison des extrémités et la séparation de la bande, **caractérisé en ce que** la distribution de la bande sur la surface de réception de bande comprend la distribution de la bande à partir d'une extrémité de distribution de bande (132) du distributeur de bande (120), l'extrémité de distribution de bande étant agencée à proximité de l'applicateur de bande (103, 104) et présentant une relation fixe avec l'applicateur de bande au cours de sa distribution, le déplacement de la bande dans une direction (230) opposée à l'extrémité de distribution de bande (132) vers une partie proximale (231) de la surface de réception de bande (153) et ensuite dans la direction d'une partie distante (232) de la surface de réception de bande (153) tout en soufflant la bande sur la surface de réception de bande.

12. Procédé selon la revendication 11, dans lequel le soufflage de la bande comprend le soufflage d'air à partir d'un ventilateur (139) dans la direction de la surface de réception de bande afin de maintenir la bande à proximité de la surface de réception de bande ou sur la surface de réception de bande alors que la bande est déplacée à travers la surface de réception de bande vers la partie proximale.

13. Procédé selon la revendication 11 ou 12, dans lequel la distribution de bande comprend le déplacement de la bande avec un niveau de rigidité prédéterminé sans supporter l'extrémité distribuée de la bande, dans lequel le distributeur est, de préférence, agencé de manière à distribuer la bande dans une direction horizontale ou verticale et/ou dans lequel la distribution de la bande comprend le guidage de la bande vers la surface de réception de bande.

14. Procédé selon l'une quelconque des revendications 11 à 13, dans lequel la bande est maintenue par la surface de réception de bande uniquement après achèvement de l'alimentation de la bande et/ou dans lequel la distribution de la bande comprend aussi l'extraction d'une feuille de séparation par rapport à la bande, comprenant, de préférence, l'extraction de la feuille de séparation et/ou dans lequel une longueur prédéterminée de la bande relie les extrémités de feuille, dans lequel au moins la longueur prédéterminée de bande est délivrée et s'étend à partir d'une extrémité de distribution d'un distributeur de bande.

15. Unité de commande agencée de manière à exécuter le procédé selon l'une quelconque des revendications 11 à 14, l'unité de commande étant, de préférence, agencée de manière à "activer/désactiver" un support de bande sur une surface de réception de bande d'un applicateur de bande.
